(19) Europäisches Patentamt
European Patent Office
Office européen des brevets

(11) **EP 4 266 415 A1**

(12) **EUROPEAN PATENT APPLICATION**
published in accordance with Art. 153(4) EPC

(43) Date of publication:
**25.10.2023 Bulletin 2023/43**

(21) Application number: **22856251.8**

(22) Date of filing: **11.08.2022**

(51) International Patent Classification (IPC):
*H01M 4/36* (2006.01)   *H01M 4/48* (2010.01)
*H01M 4/58* (2010.01)   *H01M 4/62* (2006.01)
*H01M 10/052* (2010.01)   *H01M 4/02* (2006.01)

(52) Cooperative Patent Classification (CPC):
**H01M 4/02; H01M 4/36; H01M 4/48; H01M 4/58;
H01M 4/62; H01M 10/052;** Y02E 60/10

(86) International application number:
**PCT/KR2022/012036**

(87) International publication number:
**WO 2023/018258 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 KR 20210107517**

(71) Applicant: **LG Energy Solution, Ltd.
Seoul 07335 (KR)**

(72) Inventors:
• **PARK, Semi
Daejeon 34122 (KR)**
• **SHIN, Sun Young
Daejeon 34122 (KR)**
• **OH, Ilgeun
Daejeon 34122 (KR)**
• **LEE, Su Min
Daejeon 34122 (KR)**
• **LEE, Yong Ju
Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE ACTIVE MATERIAL, NEGATIVE ELECTRODE INCLUDING SAME, SECONDARY BATTERY INCLUDING SAME, AND METHOD FOR MANUFACTURING NEGATIVE ELECTRODE ACTIVE MATERIAL**

(57)    The present invention relates to a negative electrode active material including: silicon-based composite particles including $SiO_x$ (0<x<2) and a Mg compound or Li compound; and a carbon layer provided on the silicon-based composite particles, in which the silicon-based composite particles have a BET specific surface area of 5 m$^2$/g to 60 m$^2$/g, and the negative electrode active material has a BET specific surface area of 2 m$^2$/g to 15 m$^2$/g, and a powder conductivity of 0.05 S/cm to 1 S/cm at a powder density of 1.4 g/cc, a negative electrode including the same, a secondary battery including the negative electrode and a method for preparing the negative electrode active material.

**Description**

[Technical Field]

This application claims priority to and the benefit of Korean Patent Application No. 10-2021-0107517 filed in the Korean Intellectual Property Office on August 13, 2021, the entire contents of which are incorporated herein by reference.

The present invention relates to a negative electrode active material, a negative electrode including the same, a secondary battery including the same and a method for preparing a negative electrode active material.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more. Recently, as the technological development and demand for portable devices such as portable computers, portable phones, and cameras have increased, the demand for secondary batteries as an energy source has increased sharply, and numerous studies have been conducted on a lithium secondary battery having a high energy density, that is, a high capacity among such secondary batteries, and the lithium secondary battery having a high capacity has been commercialized and widely used.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used. However, $SiO_2$ in silicon-based particles such as $SiO_x$ ($0 \leq x < 2$) partially react with lithium ions delivered from the positive electrode to produce lithium silicates, and the lithium silicates irreversibly act, and thus are a cause of reducing the initial efficiency of the battery. Further, the volume of the silicon-based particles changes too much during the charging/discharging process, causing a side reaction with an electrolyte solution. Therefore, there occurs a problem in that the service life of the battery is reduced.

In order to solve the problem in the related art, a technique of improving the initial efficiency by intentionally doping silicon-based particles with a metal, such as Mg, to block a reaction site which may be irreversibly formed has been used. However, although the initial efficiency can be improved, it is difficult to improve the service life characteristics of the battery simply by doping silicon-based particles with a metal without considering an appropriate composition, and there is a problem in that the capacity per weight is significantly reduced by the metal doping.

Meanwhile, during preparation of silicon-based particles doped with a metal, the particles may be easily oxidized, so that there occurs a problem in that the initial efficiency of the battery is reduced. Therefore, there is a need for a method for preventing the reduction of the initial efficiency of the battery.

In addition, in order to improve the conductivity of the negative electrode active material, the negative electrode active material may be prepared by forming a carbon coating layer on the silicon-based particles doped with a metal. However, since simply forming a carbon coating layer limits the improvement in conductivity, there is a limitation in the improvement in the service life characteristics of the battery. Accordingly, there is a need for a method capable of further improving the conductivity of the negative electrode active material.

[Related Art Documents]

(Patent Document 1) Korean Patent Application Laid-Open No. 10-2019-0101767

[Detailed Description of the Invention]

[Technical Problem]

A problem to be solved by the present invention is to provide a negative electrode active material capable of improving the initial efficiency and service life characteristics of a battery.

Another problem to be solved by the present invention is to provide a negative electrode including the negative electrode active material.

Still another problem to be solved by the present invention is to provide a secondary battery including the negative electrode.

Yet another problem to be solved by the present invention is to provide a method for preparing the negative electrode active material.

[Technical Solution]

An exemplary embodiment of the present specification provides a negative electrode active material including: silicon-based composite particles including $SiO_x$ (0<x<2) and a Mg compound or Li compound; and a carbon layer provided on the silicon-based composite particles, in which the silicon-based composite particles have a BET specific surface area of 5 m²/g to 60 m²/g, and the negative electrode active material has a BET specific surface area of 2 m²/g to 15 m²/g, and the negative electrode active material has a powder conductivity of 0.05 S/cm to 1 S/cm at a powder density of 1.4 g/cc.

An exemplary embodiment of the present specification provides a method for preparing the negative electrode active material, the method including: preparing silicon-based composite particles including $SiO_x$ (0<x<2) and a Mg compound or Li compound; and providing a carbon layer on the surface of the silicon-based composite particles.

An exemplary embodiment of the present specification provides a negative electrode including the negative electrode active material.

An exemplary embodiment of the present specification provides a secondary battery including the negative electrode.

[Advantageous Effects]

Since a negative electrode active material according to an exemplary embodiment of the present specification includes silicon-based composite particles having a low level of BET specific surface area and the negative electrode active material has a low level of BET specific surface area and a high powder conductivity, the initial efficiency and service life characteristics of a battery can be improved.

[Best Mode]

Hereinafter, the present invention will be described in more detail in order to help the understanding of the present invention.

The terms or words used in the present specification and the claims should not be construed as being limited to typical or dictionary meanings, and should be construed as meanings and concepts conforming to the technical spirit of the present invention on the basis of the principle that an inventor can appropriately define concepts of the terms in order to describe his or her own invention in the best way.

The terms used in the present specification are used only to describe exemplary embodiments, and are not intended to limit the present invention. Singular expressions include plural expressions unless the context clearly indicates otherwise.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

In the present specification, the size of pores may mean an average value of diameters of pores included in a negative electrode active material. That is, the size may indicate the average diameter of pores.

In the present specification, an average particle diameter ($D_{50}$) may be defined as a particle diameter corresponding to 50% of a cumulative volume in a particle diameter distribution curve of the particles. The average particle diameter ($D_{50}$) may be measured using, for example, a laser diffraction method. The laser diffraction method can generally measure a particle diameter of about several mm from the submicron region, and results with high reproducibility and high resolution may be obtained.

In the present specification, a specific surface area may be measured by the BET 6-point method by degassing gas from an object to be measured at 200°C for 8 hours using a BET measuring apparatus (BEL-SORP-MAX, Nippon Bell), and performing $N_2$ adsorption/desorption at 77 K.

In the present specification, a powder conductivity may be measured using an HPRM-1000 device manufactured by HAN TECH Co. Specifically, after an empty holder (diameter of 10 mm) is placed on a 4-probe, an initial thickness is measured when an initial pressure is 10 kgf. After the initial thickness of the holder is confirmed, about 3 g of an active material is put into the holder (diameter of 10 mm), the holder is placed on the 4-probe, and the sample information is input. By applying a pressure to the holder containing the sample, the powder conductivity may be measured based on the powder density under the corresponding pressure.

**<Negative electrode active material>**

A negative electrode active material according to an exemplary embodiment of the present specification is a negative electrode active material including: silicon-based composite particles including $SiO_x$ ($0<x<2$) and a Mg compound or Li compound; and a carbon layer provided on the silicon-based composite particles, in which the silicon-based composite particles may have a BET specific surface area of 5 m2/g to 60 m2/g, and the negative electrode active material may have a BET specific surface area of 2 m2/g to 15 m2/g, and a powder conductivity of 0.05 S/cm to 1 S/cm at a powder density of 1.4 g/cc.

The negative electrode active material according to an exemplary embodiment of the present specification includes silicon-based composite particles. The silicon-based composite particles include $SiO_x$ ($0<x<2$) and a Mg compound or Li compound.

The $SiO_x$ ($0<x<2$) may correspond to a matrix in the silicon-based composite particle. The $SiO_x$ ($0<x<2$) may be in a form including Si and $SiO_2$, and the Si may also form a phase. That is, the x corresponds to the number ratio of O for Si included in the $SiO_x$ ($0<x<2$). When the silicon-based composite particles include the $SiO_x$ ($0<x<2$), the discharge capacity of a secondary battery may be improved.

The silicon-based composite particles may include $SiO_x$ ($0<x<2$) and a Mg compound.

The silicon-based composite particles may include $SiO_x$ ($0<x<2$) and a Li compound.

In an exemplary embodiment of the present specification, the Mg compound or Li compound may be present inside and/or on the surface of the $SiO_x$ ($0<x<2$). The initial efficiency of the battery may be improved by the Mg compound or Li compound. The Mg compound or Li compound may correspond to a matrix in the silicon-based composite particle.

The Mg compound may include at least any one selected from the group consisting of Mg silicates, Mg silicides and Mg oxides. The Mg silicate may include at least any one of $Mg_2SiO_4$ and $MgSiO_3$. The Mg silicide may include $Mg_2Si$. The Mg oxide may include MgO.

The Li compound may include at least any one selected from the group consisting of Li silicates, Li silicides and Li oxides. The Li silicate may include at least any one of $Li_2SiO_3$, $Li_4SiO_4$ and $Li_2Si_2O_5$. The Li silicide may include $Li_7Si_2$. The Li oxide may include $Li_2O$.

In an exemplary embodiment of the present specification, the Mg element or Li element may be included in an amount of 0.1 wt% to 20 wt% or 0.1 wt% to 10 wt% based on total 100 wt% of the silicon-based composite particles. Specifically, the Mg element or Li element may be included in an amount of 0.5 wt% to 8 wt% or 0.8 wt% to 4 wt%.

In an exemplary embodiment of the present specification, the Mg element or Li element may be included in an amount of 0.1 wt% to 20 wt%, or 0.1 wt% to 10 wt% based on total 100 wt% of the negative electrode active material. Specifically, the Mg element or Li element may be included in an amount of 0.5 wt% to 8 wt% or 0.8 wt% to 4 wt%. When the above range is satisfied, the Mg compound and the Li compound phase may be included in an appropriate content in the negative electrode active material, so that the volume change of the negative electrode active material during the charging and discharging of a battery may be readily suppressed, and the discharge capacity and initial efficiency of the battery may be improved.

The content of the Mg element or Li element may be confirmed by ICP analysis. For the ICP analysis, after a predetermined amount (about 0.01 g) of the negative electrode active material is exactly aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of the Mg element or Li element using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the Mg element and the Li element of the prepared negative electrode active material may be analyzed by converting the total sum so as to be the theoretical value.

The silicon-based composite particles may have a BET specific surface area of 5 m$^2$/g to 60 m$^2$/g. Specifically, the silicon-based composite particles may have a BET specific surface area of 10 m$^2$/g to 60 m$^2$/g, 20 m$^2$/g to 60 m$^2$/g, 25 m$^2$/g to 60 m$^2$/g or 30 m$^2$/g to 60 m$^2$/g. When the BET specific surface area of the silicon-based composite particles does not satisfy the above range, the discharge capacity and initial efficiency are low, and the normalized capacity decreases as the cycle progresses, so that there is a problem in that the cycle performance is poor. Specifically, when the silicon-based composite particles have a BET specific surface area of less than 5 m$^2$/g, there is a problem in that as the cycle progresses, swelling increases, resulting in poor cycle performance, and when the silicon-based composite particles have a BET specific surface area of more than 60 m$^2$/g, there is a problem in that coating uniformity tends to easily deteriorate during carbon coating, and the silicon-based composite particles are easily oxidized when exposed to the outside (moisture), and thus the capacity and efficiency characteristics become poor.

The lower limit of the BET specific surface area of the silicon-based composite particles may be 5 m$^2$/g, 10 m$^2$/g, 15 m$^2$/g, 20 m$^2$/g, 25 m$^2$/g, 30 m$^2$/g, 35 m$^2$/g or 40 m$^2$/g, and the upper limit thereof may be 60 m$^2$/g, 55 m$^2$/g or

50 m$^2$/g.

In an exemplary embodiment of the present specification, a carbon layer may be provided on the silicon-based composite particles. In this case, the carbon layer may be in the case of being provided on at least a part of the surface of the silicon-based particles. That is, the carbon layer may be in the form of being partially provided on the particle surface or being provided on the entire particle surface. Further, when the silicon-based composite particles include pores, the carbon layer may also be provided in the pores. Accordingly, conductivity is imparted to the silicon-based composite particles, and the volume change of a negative electrode active material including the silicon-based composite particles is effectively suppressed, so that the service life characteristics of the battery may be improved.

In an exemplary embodiment of the present specification, the carbon layer may include at least any one of amorphous carbon and crystalline carbon.

The crystalline carbon may further improve the conductivity of the silicon-based composite particles. The crystalline carbon may include at least any one selected from the group consisting of fullerene, carbon nanotube and graphene.

The amorphous carbon may suppress the expansion of the silicon-based composite particles by appropriately maintaining the strength of the carbon layer. The amorphous carbon may be a carbide of at least any one material selected from the group consisting of tar, pitch and other organic materials, or may be a carbon-based material formed by using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present specification, the carbon layer may be included in an amount of 1 wt% to 50 wt% based on total 100 wt% of the negative electrode active material. Specifically, the carbon layer may be included in an amount of 2 wt% to 45 wt%, 3 wt% to 40 wt%, 3 wt% to 30 wt%, 3 wt% to 20 wt% or 3 wt% to 17 wt%. When the above range is satisfied, the conductivity of the negative electrode active material is improved, and the volume change of the negative electrode active material during the charging and discharging of a battery is readily suppressed, so that the service life characteristics of the battery may be improved.

In an exemplary embodiment of the present specification, the carbon layer may have a thickness of 1 nm to 500 nm, specifically 5 nm to 300 nm. When the above range is satisfied, the volume change of the negative electrode active material is readily suppressed and side reactions between an electrolyte solution and the negative electrode active material are suppressed, so that the service life characteristics of a battery may be improved.

In an exemplary embodiment of the present specification, the negative electrode active material may have a BET specific surface area of 2 m$^2$/g to 15 m$^2$/g. Specifically, the negative electrode active material may have a BET specific surface area of 2 m$^2$/g to 13 m$^2$/g, 2 m$^2$/g to 12 m$^2$/g or 2.5 m$^2$/g to 12 m$^2$/g. When the above range is satisfied, side reactions between an electrolyte solution and the negative electrode active material during the charging and discharging of a battery may be reduced, so that the service life characteristics of the battery may be improved. In contrast, when the negative electrode active material has a BET specific surface area of less than 2 m$^2$/g, there is a problem in that swelling increases as the cycle progresses, and thus the cycle performance becomes poor, and when the negative electrode active material has a BET specific surface area of more than 15 m$^2$/g, there is a problem in that the side reaction with the electrolyte solution is increased, the slurry rheological characteristics become poor, and the service life characteristics of the battery deteriorate.

The lower limit of the BET specific surface area of the negative electrode active material may be 2 m$^2$/g, 2.5 m$^2$/g, 3 m$^2$/g, 4 m$^2$/g, 6 m$^2$/g, 8 m$^2$/g or 10 m$^2$/g, and the upper limit thereof may be 15 m$^2$/g, 13 m$^2$/g or 12 m$^2$/g.

The BET specific surface area of the negative electrode active material generally corresponds to a value lower than the BET specific surface area of metal-doped silicon-based particles including a carbon layer. In the case of general particles in the related art, it is difficult to control the BET specific surface area of the silicon-based particles, so that the BET specific surface area of the negative electrode active material is large and the coating uniformity during carbon coating deteriorates. However, in the present invention, the BET specific surface area of the silicon-based composite particles is controlled to less than 60 m$^2$/g, so that the BET specific surface area of the negative electrode active material may also be efficiently controlled, and the powder conductivity may be more easily secured by uniformly coating the carbon layer.

In the present specification, the powder density means the weight per unit volume of a pellet made of a material to be measured, and means the apparent density of the material to be measured.

In the present specification, the powder conductivity means the conversion of a measured surface resistance value into a conductivity after the powder of the material to be measured is pelletized.

In the present specification, a powder conductivity may be measured using an HPRM-1000 device manufactured by HAN TECH Co. Specifically, after an empty holder (diameter of 10 mm) is placed on a 4-probe, an initial thickness is measured when an initial pressure is 10 kgf. After the initial thickness of the holder is confirmed, about 3 g of an active material is put into the holder (diameter of 10 mm), the holder is placed on the 4-probe, and the sample information is input. By applying a pressure to the holder containing the sample, the powder conductivity may be measured based on the powder density under the corresponding pressure.

The negative electrode active material may have a powder conductivity of 0.05 S/cm to 1 S/cm at a powder density of 1.4 g/cc. Specifically, the negative electrode active material may have a powder conductivity of 0.05 S/cm to 0.9 S/cm or 0.1 S/cm to 0.8 S/cm. The lower limit of the powder conductivity may be 0.05 S/cm, 0.08 S/cm, 0.1 S/cm, 0.2 S/cm, 0.3 S/cm, 0.4 S/cm or 0.5 S/cm, and the upper limit thereof may be 1 S/cm, 0.9 S/cm or 0.8 S/cm.

In the case of general particles in the related art, the silicon-based composite particles have a large BET specific surface area and a powder conductivity of less than 0.05 S/cm, and since the normalized capacity deteriorates as the cycle progresses, there is a problem in that the cycle performance is poor. Specifically, since silicon-based composite particles have almost no conductivity, when the powder conductivity of the negative electrode active material is less than 0.05 S/cm, the charging/discharging itself is not easy, so that the capacity and efficiency deteriorate, and cycle characteristics may be poor. In contrast, when the powder conductivity exceeds 1 S/cm, there occurs a problem in that when the negative electrode active material is mixed with a carbon-based negative electrode active material (for example, graphite) and used in a negative electrode, Li present in the carbon-based negative electrode active material is easily diffused into the silicon-based composite particles during high-temperature storage, and thus, the capacity deteriorates due to the loss of Li ions.

In contrast, the negative electrode active material according to the present invention may exhibit a powder conductivity of 0.05 S/cm to 1 S/cm through a heat treatment step and a carbon layer formation step to be described below. By having the powder conductivity as described above, it is possible to secure sufficient conductivity of the negative electrode active material and simultaneously prevent a deterioration in capacity due to the loss of Li ions during use in a negative electrode.

Therefore, since the negative electrode active material of the present invention includes silicon-based composite particles having a low level of BET specific surface area and the negative electrode active material has a low level of BET specific surface area and high powder conductivity, the initial efficiency and service life characteristics of a battery can be improved by reducing a side reaction with an electrolyte solution and uniformly and effectively disposing a carbon coating layer.

In contrast, when the BET specific surface area of the silicon-based composite particles does not satisfy the above range even though the BET specific surface area and powder conductivity of the negative electrode active material satisfy the above ranges, there is a problem in that when the silicon-based composite particles are exposed to the outside (moisture), the capacity and efficiency deteriorate due to oxidation reaction.

Further, when the BET specific surface area of the negative electrode active material does not satisfy the above range even though the powder conductivity of the negative electrode active material and the BET specific surface area of the silicon-based composite particles satisfy the above ranges, a side reaction with the electrolyte solution during charging/discharging is so large that there is a problem in that the deterioration in capacity due to cycles is significant.

In addition, when the powder conductivity of the negative electrode active material does not satisfy the above range even though the BET specific surface area of the silicon-based composite particles and the BET specific surface area of the negative electrode active material satisfy the above ranges, charging/discharging does not progress due to low conductivity and Li present in graphite is easily diffused into silicon-based composite particles during high-temperature storage in the mixed composition of graphite, so that there is a problem in that the capacity deteriorates due to the loss of Li ions.

Therefore, the negative electrode active material of the present invention, in which the negative electrode active material of the present invention satisfies all of the above-described ranges for the BET specific surface area of the silicon-based composite particles and the BET specific surface area and powder conductivity of the negative electrode active material, is effective in improving the initial efficiency and service life characteristics of a battery.

In an exemplary embodiment of the present specification, the silicon-based composite particles may further include pores.

In the present specification, the size of the pores included in the silicon-based composite particles means the size except for the carbon layer provided in the pores.

In an exemplary embodiment of the present specification, the pores may have a size of 50 nm or less, specifically 2 nm to 45 nm, and more specifically 2 nm to 40 nm.

In another exemplary embodiment, the pores may have a size of 5 nm to 40 nm, 10 nm to 40 nm, or 20 nm to 40 nm.

In still another exemplary embodiment, the pores may have a size of 2 nm to 30 nm, 4 nm to 25 nm, or 5 nm to 20 nm.

In an exemplary embodiment of the present specification, the lower limit of the pore size may be 1 nm, 2 nm, 3 nm, 4 nm, 5 nm, 10 nm, 15 nm or 20 nm, and the upper limit thereof may be 50nm, 45 nm, 40 nm, 35 nm, 30 nm, 25 nm or 20 nm.

When the pores have a size more than 50 nm, the side reactions between an electrolyte solution and the silicon-based composite particles are increased, so that the service life characteristics of the battery deteriorate. The size of pores is particularly controlled by a process such as the synthesis, etching, and additional heat treatment of silicon-based composite particles, and corresponds to a lower value than the pore size of silicon-based composite particles in the related art.

By further including pores in the silicon-based composite particles as described above, the irreversible phase of the silicon-based composite particles may be removed to increase the initial efficiency of the battery, the change in the volume of the silicon-based composite particles may be accommodated, and a carbon layer may also be disposed inside the pores to easily secure the powder conductivity. Furthermore, side reactions with an electrolyte solution during the charging and discharge of a battery may be reduced by controlling the size of the pores as described above, so that the service life characteristics of the battery may be improved.

When the silicon-based composite particles further include pores as described above, the negative electrode active material preferably has a BET specific surface area of 10 $m^2/g$ to 15 $m^2/g$.

The negative electrode active material may have an average particle diameter ($D_{50}$) of 2 um to 15 um, specifically 3 um to 12 $\mu$m, and more specifically 4 um to 10 um. When the above range is satisfied, side reactions between the negative electrode active material and an electrolyte solution may be controlled, and the discharge capacity and initial efficiency of the battery may be effectively implemented.

### <Method for preparing negative electrode active material>

The negative electrode active material according to the above-described exemplary embodiments may be prepared by a method including: preparing silicon-based composite particles including $SiO_x$ (0<x<2) and a Mg compound or Li compound; and providing a carbon layer on the surface of the silicon-based composite particles.

In an exemplary embodiment of the present specification, the silicon-based composite particles including the $SiO_x$ (0<x<2) and the Mg compound or Li compound may be formed through forming a mixed gas by vaporizing a powder in which a Si powder and a $SiO_2$ powder are mixed and a Mg precursor or Li precursor, respectively, and then mixing the vaporized powder and the vaporized precursor; and heat-treating the mixed gas at 500°C to 1000°C.

In an exemplary embodiment of the present specification, the method for preparing a negative electrode active material may further include cooling the silicon-based composite particles to room temperature at a rate of 2°C/min to 60°C/min after the preparing of the silicon-based composite particles.

In an exemplary embodiment of the present specification, the silicon-based composite particles including the Mg compound may be formed through forming a mixed gas by vaporizing a powder in which a Si powder and a $SiO_2$ powder are mixed and a Mg precursor, respectively, and then mixing the vaporized powder and the vaporized Mg precursor, and heat-treating the mixed gas at 500°C to 1000°C.

The mixed powder of the Si powder and the $SiO_2$ powder may be vaporized by performing heat treatment at 1000°C to 1800°C or 1200°C to 1500°C.

The Mg precursor may be a Mg powder, and may be vaporized by performing heat treatment at 500°C to 1200°C or 600°C to 800°C. By allowing the materials to react in a gas state as described above, Mg may be uniformly distributed in the silicon-based oxide particles.

The heat treatment may be performed at 500°C to 1000°C, 600°C to 900°C, 650°C to 850°C or 700°C to 800°C for 1 hour to 4 hours or 2 hours to 3 hours, and may be performed in a vacuum state.

In the silicon-based oxide particles, the Mg compound may include the above-described Mg silicates, Mg silicides, Mg oxides, and the like.

In an exemplary embodiment of the present invention, after the preparing of the silicon-based composite particles, the silicon-based composite particles may be cooled to room temperature at a rate of 2°C/min to 60°C/min.

The cooling of the silicon-based composite particles may be performed at a rate of 2°C/min to 60°C/min, 5°C/min to 50°C/min or 5°C/min to 10°C/min.

The BET specific surface area of the silicon-based composite particles may be easily controlled through the heat treatment and cooling steps as described above.

The particle diameter of the silicon-based oxide particles including Mg prepared by the method as described above may be adjusted by a pulverization method such as a mechanical milling method, if necessary.

Further, silicon-based composite particles including a Li compound may be prepared using a Li precursor instead of the Mg precursor in the above preparation method.

In an exemplary embodiment of the present specification, the silicon-based composite particles including the Li compound may be formed through forming a mixed gas by vaporizing a powder in which a Si powder and a $SiO_2$ powder are mixed and a Li precursor, respectively, and then mixing the vaporized powder and the vaporized Li precursor, and heat-treating the mixed gas at 500°C to 1000°C in a vacuum state.

The mixed powder of the Si powder and the $SiO_2$ powder may be vaporized by performing heat treatment at 1000°C to 1800°C or 1200°C to 1500°C.

The Li precursor may be a Li powder, and may be vaporized by performing heat treatment at 500°C to 1200°C or 700°C to 900°C. By allowing the materials to react in a gas state as described above, Li may be uniformly distributed in the silicon-based oxide particles.

The heat treatment may be performed at 500°C to 1000°C, 600°C to 900°C, 650°C to 800°C or 650°C to 750°C for 1 hour to 4 hours or 2 hours to 3 hours, and may be performed in a vacuum state.

In the silicon-based composite particles, the Li compound may include the above-described Li silicates, Li silicides, Li oxides, and the like.

In an exemplary embodiment of the present invention, after the preparing of the silicon-based composite particles, the silicon-based composite particles may be cooled to room temperature at a rate of 2°C/min to 60°C/min.

The cooling of the silicon-based composite particles may be performed at a rate of 2°C/min to 60°C/min, 5°C/min to 50°C/min or 5°C/min to 10°C/min.

The BET specific surface area of the silicon-based composite particles may be easily controlled through the heat treatment and cooling steps as described above.

In an exemplary embodiment of the present specification, it is possible to include etching the silicon-based composite particles after the preparing of the silicon-based composite particles.

In this case, the etching may be performed using an acid or a base, the acid may be at least any one of hydrofluoric acid (HF), nitric acid ($HNO_3$), sulfuric acid ($H_2SO_4$) and hydrochloric acid (HCl), and the base may be at least any one of sodium hydroxide (NaOH) and potassium hydroxide (KOH). Specifically, a mixed solution of hydrofluoric acid and ethanol may be used during the etching. Through the etching step, the discharge capacity and efficiency of a battery may be improved while the Mg compound phase and the Li compound or $SiO_2$ of the silicon-based composite particles are removed. The etching may be performed for 10 minutes to 3 hours, specifically, 30 minutes to 2 hours.

The silicon-based composite particles may further include pores through the etching step.

The silicon-based composite particles provided as described above may have a BET specific surface area of 5 $m^2$/g to 60 $m^2$/g. Specifically, the silicon-based composite particles may have a BET specific surface area of 10 $m^2$/g to 60 $m^2$/g, 20 $m^2$/g to 60 $m^2$/g or 30 $m^2$/g to 60 $m^2$/g.

In the providing of the carbon layer, the carbon layer may be prepared by using a chemical vapor deposition (CVD) method using a hydrocarbon gas, or by carbonizing a material to be used as a carbon source.

For example, the providing of the carbon layer may be performed by injecting a carbon-based raw material gas (hydrocarbon gas) such as methane gas and performing heat treatment in a rotary tubular furnace. Specifically, a carbon layer may be formed by introducing the silicon-based composite particles into a rotary tubular furnace, increasing the temperature to 600°C to 1200°C, 800°C to 1150°C, 900°C to 1050°C or 950°C to 1,000°C at a rate of 3 to 10°C/min or about 5°C/min, flowing an argon gas and a carbon-based material raw material gas while rotating the rotary tubular furnace, and performing a heat treatment for 30 minutes to 8 hours.

**<Negative electrode>**

The negative electrode according to an exemplary embodiment of the present specification may include the above-described negative electrode active material. Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder and/or a conductive material.

The negative electrode active material layer may be formed by applying a negative electrode slurry including a negative electrode active material, a binder, a thickener and/or a conductive material to at least one surface of a current collector and drying and rolling the current collector.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as $SiO_\beta$ ($0 < \beta < 2$), $SnO_2$, vanadium oxide, lithium titanium oxide, and lithium vanadium oxide; or a composite including the metallic compound and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The additional negative electrode active material may be a carbon-based negative electrode active material.

The carbon-based negative electrode active material may be graphite, specifically, artificial graphite or natural graphite.

In an exemplary embodiment of the present invention, a weight ratio of the negative electrode active material and the additional negative electrode active material included in the negative electrode slurry may be 1:99 to 90:10, specifically 5:95 to 60:40 or 10:90 to 50:50.

The content of the negative electrode active material according to the present invention may be 1 part by weight to 50 parts by weight based on the entire negative electrode active material. Specifically, the content may be 5 parts by weight to 30 parts by weight, 8 parts by weight to 20 parts by weight or 10 parts by weight to 15 parts by weight.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

The negative electrode current collector is sufficient as long as the negative electrode current collector has conductivity without causing a chemical change to the battery, and is not particularly limited. For example, as the current collector, it is possible to use copper, stainless steel, aluminum, nickel, titanium, fired carbon, or a material in which aluminum or stainless steel whose surface is surface-treated with carbon, nickel, titanium, silver, and the like. Specifically, a transition metal, such as copper or nickel which adsorbs carbon well, may be used as a current collector. Although the current collector may have a thickness of 6 um to 20 $\mu$m, the thickness of the current collector is not limited thereto.

The binder may include at least any one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a carbon fluoride powder; a metal powder such asan aluminum powder, and a nickel powder; a conductive whisker such as zinc oxide and potassium titanate; a conductive metal oxide such as titanium oxide; a conductive material such as polyphenylene derivatives, and the like.

**<Secondary battery>**

The secondary battery according to an exemplary embodiment of the present specification may include the negative electrode according to the above-described exemplary embodiment. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}Mc_2O_2$ (here, M is at least any one selected from the group consisting of Co, Mn, Al, Cu, Fe, Mg, B and Ga, and c2 satisfies $0.01 \leq c2 \leq 0.3$); a lithium manganese composite oxide expressed as chemical formula $LiMn_{2-c3}M_{c3}O_2$ (here, M is at least any one selected from the group consisting of Co, Ni, Fe, Cr, Zn and Ta, and c3 satisfies $0.01 \leq c3 \leq 0.1$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte solution, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^{\sim}$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present specification provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

[Mode for Invention]

Hereinafter, the present specification will be described in detail with reference to Examples for specifically describing the present specification. However, the Examples according to the present specification may be modified in various forms, and it is not interpreted that the scope of the present application is limited to the Examples described in detail below. The Examples of the present application are provided to explain the present specification more completely to a person with ordinary skill in the art.

<Examples and Comparative Examples>

Example 1: Preparation of negative electrode active material

(1) Preparation of silicon-based composite particles

A powder in which a Si powder and a $SiO_2$ powder were uniformly mixed at a molar ratio of 1:1 and Mg were heat-treated at 1,400°C and 700°C, respectively, in a reduced pressure atmosphere to vaporize the Si powder, the $SiO_2$ powder, and the Mg. Particles were prepared by heat-treating a mixed gas in which the Si powder, the $SiO_2$ powder, and the Mg which had been vaporized were mixed in a chamber in a vacuum state at 800°C for 3 hours, and then cooling the heat-treated mixed gas at a rate of 5°C/min. The particles were pulverized with a jet mill to form silicon-based composite particles having an average particle diameter ($D_{50}$) of 5 um and a BET specific surface area of 29 $m^2$/g.

(2) Preparation of negative electrode active material

Thereafter, the silicon-based composite particles were positioned in a hot zone of a CVD apparatus while maintaining an inert atmosphere by flowing Ar gas, and the methane was blown into the hot zone at 900°C using Ar as a carrier gas and reacted (coated with carbon) at $10^{-1}$ torr for 3 hours to prepare a negative electrode active material in which a carbon layer was formed on the surface of the silicon-based composite particles.

The negative electrode active material particles had a BET specific surface area of 8.2 $m^2$/g, and a powder conductivity of 0.1 S/cm at a powder density of 1.4 g/cc.

The C content and Mg content of the negative electrode active material particles were 3.5 wt% and 6.0 wt%, respectively.

**Example 2: Preparation of negative electrode active material**

A negative electrode active material was prepared in the same manner as in Example 1, except that during the preparation of the silicon-based composite particles, the heat treatment of the mixed gas was performed at 800°C for 2 hours and the cooling rate was set to 50°C/min, and during the preparation of the negative electrode active material particles, the carbon coating time was set to 7 hours.

**Example 3: Preparation of negative electrode active material**

(1) Preparation of silicon-based composite particles

A powder in which a Si powder and a $SiO_2$ powder were uniformly mixed at a molar ratio of 1:1 and Mg were heat-treated at 1,400°C and 700°C, respectively, in a reduced pressure atmosphere to vaporize the Si powder, the $SiO_2$ powder, and the Mg. Particles were prepared by heat-treating a mixed gas in which the Si powder, the $SiO_2$ powder, and the Mg which had been vaporized were mixed in a chamber in a vacuum state at 800°C for 2 hours, and then cooling the heat-treated mixed gas at a rate of 50°C/min. The particles were pulverized with a jet mill to form preliminary silicon-based composite particles having an average particle diameter ($D_{50}$) of about 5 um.

Thereafter, a mixed solution of hydrofluoric acid and ethanol was used as an etching solution, the silicon-based composite particles were added to the etching solution at a weight ratio of 20:1, the resulting mixture was mixed for about 30 minutes, then filtered, washed and dried to form silicon-based composite particles having a BET specific surface area of 59 $m^2/g$.

(2) Preparation of negative electrode active material

Thereafter, the silicon-based composite particles were positioned in a hot zone of a CVD apparatus while maintaining an inert atmosphere by flowing Ar gas, and the methane was blown into the hot zone at 900°C using Ar as a carrier gas and reacted (coated with carbon) at $10^{-1}$ torr for 8 hours to prepare a negative electrode active material in which a carbon layer was formed on the surface of the silicon-based composite particles.
The pores included in the negative electrode active material have an average size of 39 nm.
The negative electrode active material particles had a BET specific surface area of 11.9 $m^2/g$, and a powder conductivity of 0.8 S/cm.
The C content and Mg content of the negative electrode active material particles were 16.2 wt% and 2.9 wt%, respectively.

**Example 4: Preparation of negative electrode active material**

A negative electrode active material was prepared in the same manner as in Example 1, except that during the preparation of the silicon-based composite particles, the cooling rate was set to 10°C/min after the heat treatment, and during the preparation of the negative electrode active material particles, the carbon coating time was set to 4 hours.

**Example 5: Preparation of negative electrode active material**

(1) Preparation of silicon-based composite particles

A powder in which a Si powder and a $SiO_2$ powder were uniformly mixed at a molar ratio of 1:1 and Li were heat-treated at 1,400°C and 800°C, respectively, in a reduced pressure atmosphere to vaporize the Si powder, the $SiO_2$ powder, and the Li. Particles were prepared by heat-treating a mixed gas in which the Si powder, the $SiO_2$ powder, and the Li which had been vaporized were mixed in a chamber in a vacuum state at 700°C for 3 hours, and then cooling the heat-treated mixed gas at a rate of 5°C/min. The particles were pulverized with a jet mill to form preliminary silicon-based composite particles having an average particle diameter ($D_{50}$) of 5 um and a BET specific surface area of 21 $m^2/g$.

(2) Preparation of negative electrode active material

Thereafter, the silicon-based composite particles were positioned in a hot zone of a CVD apparatus while maintaining an inert atmosphere by flowing Ar gas, and the methane was blown into the hot zone at 900°C using Ar as a carrier gas and reacted (coated with carbon) at $10^{-1}$ torr for 3 hours to prepare a negative electrode active material in which a carbon layer was formed on the surface of the silicon-based composite particles.
The negative electrode active material particles had a BET specific surface area of 2.6 $m^2/g$, and a powder conductivity of 0.3 S/cm.
The C content and Li content of the negative electrode active material particles were 4.5 wt% and 5.9 wt%, respectively.

**Example 6: Preparation of negative electrode active material**

A negative electrode active material was prepared in the same manner as in Example 5, except that the Li content was increased such that the Li content of the negative electrode active material particles became 9.1 wt%.

**Comparative Example 1: Preparation of negative electrode active material**

A negative electrode active material was prepared in the same manner as in Example 1, except that the heat treatment of the mixed gas was performed at 1100°C for 3 hours during the preparation of the silicon-based composite particles.

**Comparative Example 2: Preparation of negative electrode active material**

A negative electrode active material was prepared in the same manner as in Example 1, except that during the preparation of the silicon-based composite particles, the heat treatment of the mixed gas was not performed and the cooling rate was set to 70°C/min, and during the preparation of the negative electrode active material particles, the carbon coating time was set to 8 hours and 30 minutes.

**Comparative Example 3: Preparation of negative electrode active material**

A negative electrode active material was prepared in the same manner as in Example 1, except that during the preparation of the silicon-based composite particles, the heat treatment of the mixed gas was performed at 1100°C for 4 hours, and during the preparation of the negative electrode active material particles, the carbon coating time was set to 3 hours and 30 minutes.

**Comparative Example 4: Preparation of negative electrode active material**

A negative electrode active material was prepared in the same manner as in Example 3, except that during the preparation of the silicon-based composite particles, the heat treatment was not performed, the cooling rate was set to 75°C/min and the etching time was set to 1 hour, and during the preparation of the negative electrode active material particles, the carbon coating time was set to 2 hours.

**Comparative Example 5: Preparation of negative electrode active material**

A negative electrode active material was prepared in the same manner as in Example 1, except that during the preparation of the silicon-based composite particles, the heat treatment was performed at 1100°C for 4 hours, and during the preparation of the negative electrode active material particles, the carbon coating time was set to 2 hours.

**Comparative Example 6: Preparation of negative electrode active material**

A negative electrode active material was prepared in the same manner as in Example 3, except that during the preparation of the silicon-based composite particles, the heat treatment was not performed, the cooling rate was set to 70°C/min and the etching time was set to 1 hour, and during the preparation of the negative electrode active material particles, the carbon coating time was set to 8 hours and 30 minutes.

**Comparative Example 7: Preparation of negative electrode active material**

A negative electrode active material was prepared in the same manner as in Example 5, except that during the preparation of the silicon-based composite particles, the heat treatment was performed at 1100°C for 3 hours, and during the preparation of the negative electrode active material particles, the carbon coating time was set to 3 hours and 30 minutes.

**Comparative Example 8: Preparation of negative electrode active material**

A negative electrode active material was prepared in the same manner as in Example 5, except that during the preparation of the silicon-based composite particles, the heat treatment was not performed and the cooling rate was set to 70°C/min, and during the preparation of the negative electrode active material particles, the carbon coating time was set to 8 hours and 30 minutes.

**Comparative Example 9: Preparation of negative electrode active material**

A negative electrode active material was prepared in the same manner as in Example 1, except that during the preparation of the negative electrode active material particles, the carbon coating source was changed to pitch and the coating time was set to 4 hours.

The negative electrode active materials prepared in the Examples and the Comparative Examples are shown in the following Table 1.

[Table 1]

| | BET specific surface area (m²/g) of silicon-based composite particles | BET specific surface area (m²/g) of negative electrode active material | Powder conductivity (S/cm) of negative electrode active material at a powder density of 1.4g/cc | Content (wt%) of C element of negative electrode active material | Content (wt%) of Mg element or Li element of negative electrode active material |
|---|---|---|---|---|---|
| Example 1 | 29 | 8.2 | 0.1 | 3.5 | 6.0 (Mg) |
| Example 2 | 49 | 10.2 | 0.7 | 14.1 | 3.6 (Mg) |
| Example 3 | 59 | 11.9 | 0.8 | 16.2 | 2.9 (Mg) |
| Example 4 | 35 | 8.5 | 0.2 | 5.5 | 6.0 (Mg) |
| Example 5 | 21 | 2.6 | 0.3 | 4.5 | 5.9 (Li) |
| Example 6 | 31 | 3.1 | 0.4 | 4.5 | 9.1 (Li) |
| Comparative Example 1 | 3 | 3.1 | 0.06 | 3.5 | 6.0 (Mg) |
| Comparative Example 2 | 71 | 14.3 | 0.8 | 17.5 | 2.1 (Mg) |
| Comparative Example 3 | 2 | 1.8 | 0.06 | 5.1 | 5.7 (Mg) |
| Comparative Example 4 | 75 | 16.1 | 0.4 | 3.5 | 9.3 (Mg) |
| Comparative Example 5 | 2 | 1.2 | 0.03 | 3.5 | 5.9 (Mg) |
| Comparative Example 6 | 81 | 14.6 | 1.2 | 18.3 | 1.9 (Mg) |
| Comparative Example 7 | 3 | 3.1 | 0.1 | 5.5 | 5.8 (Li) |
| Comparative Example 8 | 72 | 13.9 | 0.9 | 17.1 | 1.9 (Li) |
| Comparative Example 9 | 29 | 3.1 | 0.04 | 5.3 | 6.0 (Mg) |

The specific surface areas of the silicon-based composite particle and the negative electrode active material were measured by the Brunauer-Emmett-Teller (BET) method. Specifically, the specific surface areas were measured by a BET six-point method by a nitrogen gas adsorption distribution method using a porosimetry analyzer (Bell Japan Inc, Belsorp-II mini).

The size of the pores was measured by an equation according to a Barrett-Joyner-Halenda (BJH) method by a nitrogen adsorption method. Specifically, a pore area according to the size of pores was derived using a BELSORP-mini II model manufactured by BEL Japan, Inc., and then the size (Dp/nm) of pores showing the largest pore area (dVp/dDp) was measured.

The contents of the Mg and Li elements were measured by ICP analysis. Specifically, after a predetermined amount (about 0.01 g) of the negative electrode active material was aliquoted, the negative electrode active material was completely decomposed on a hot plate by transferring the aliquot to a platinum crucible and adding nitric acid, hydrofluoric acid, or sulfuric acid thereto. Thereafter, a reference calibration curve was prepared by measuring the intensity of a standard liquid prepared using a standard solution (5 mg/kg) in an intrinsic wavelength of each element using an inductively coupled plasma atomic emission spectrometer (ICPAES, Perkin-Elmer 7300). Thereafter, a pretreated sample solution and a blank sample were each introduced into the apparatus, an actual intensity was calculated by measuring each intensity, the concentration of each component relative to the prepared calibration curve was calculated, and then the contents of the Mg and Li elements of the prepared negative electrode active material were analyzed by converting the total sum so as to be the theoretical value.

The average particle diameter ($D_{50}$) may be defined as a particle diameter corresponding to 50% of a cumulative volume in a particle diameter distribution curve of the particles. The average particle diameter ($D_{50}$) may be measured with Malvern equipment using a laser diffraction method.

Powder conductivity was measured using an HPRM-1000 device manufactured by HAN TECH Co. After an empty holder (diameter of 10 mm) was placed on a 4-probe, an initial thickness was measured when an initial pressure was 10 kgf. After the initial thickness of the holder was confirmed, about 3 g of the active material was put into the holder (diameter of 10 mm), the holder was placed on the 4-probe, the sample information was input, and then pressure was applied to the holder containing the sample to measure a powder conductivity at a powder density of 1.4 g/cc.

**<Experimental Example: discharge capacity and initial efficiency>**

A uniform negative electrode slurry was prepared by mixing together the negative electrode active material prepared in Example 1 as a negative electrode active material, carbon black as a conductive material, and lithium polyacrylic acid (Li-PAA) as a binder at a weight ratio of 80:10:10 with a solvent, that is, water ($H_2O$). One surface of the copper current collector was coated with the prepared negative electrode slurry, and the copper current collector was dried and rolled, and then punched in a predetermined size to manufacture a negative electrode.

Li metal was used as a counter electrode, and after a polyolefin separator was interposed between the negative electrode and Li metal, an electrolyte in which 1 M LiPF6 was dissolved into a solvent in which ethylene carbonate (EC) and diethyl carbonate (EMC) were mixed at a volume ratio of 30:70 was injected, thereby manufacturing a coin-type half battery in Example 1A.

Coin-type half batteries in Examples 2A to 6A and Comparative Examples 1A to 9A were manufactured in the same manner as in Example 1A, except that the silicon-based composites in Examples 2 to 6 and Comparative Examples 1 to 9 were used.

Charging conditions: CC (constant current)/CV (constant voltage) (5 mV/0.005 C current cut-off)
Discharging conditions: CC (constant current) conditions 1.5 V voltage cut-off

The discharge capacity (mAh/g) and initial efficiency (%) were derived from the results during one-time charge/discharge, and are shown in the following Table 2.

**<Experimental example: Evaluation of service life (capacity retention rate) characteristics>**

A mixed negative electrode active materials in which each of the negative electrode active materials in Examples 1 to 6 and Comparative Examples 1 to 9 and natural graphite were mixed at a weight ratio of 1:9, carbon black as a conductive material, and carboxymethyl cellulose (CMC) and styrene butadiene rubber (SBR) as binders were mixed with water as a solvent at a weight ratio of the mixed negative electrode active material : the conductive material : the binder (CMC) : the binder (styrene butadiene) = 95.4:1:1.1:2.5, thereby preparing a negative electrode slurry. (The solid content was about 49 wt% with respect to the total weight of the negative electrode slurry). After the negative electrode slurry was applied to a copper (Cu) metal thin film as a negative electrode current collector and dried, the metal thin film was punched to a predetermined size, thereby manufacturing a negative electrode.

As a counter electrode, a Li metal was used. After a polyolefin separator was interposed between the negative electrode and Li metal, an electrolyte in which 1 M $LiPF_6$ was dissolved into a solvent in which ethylene carbonate (EC) and diethyl carbonate (EMC) were mixed at a volume ratio of 3:7 was injected, thereby preparing a lithium coin-type half battery.

The capacity retention rate was evaluated by charging and discharging the manufactured battery, and is shown in the following Table 2.

For the 1st and 2nd cycles, the battery was charged and discharged at 0.1 C, and from the 3rd to 50th cycles, the battery was charged and discharged at 0.5 C.

Charging conditions: CC (constant current)/CV (constant voltage) (5 mV/0.005 C current cut-off)
Discharging conditions: CC (constant current) conditions 1.5 V voltage cut-off

The capacity retention rate was derived by the following calculation.

```
     - Capacity retention rate (%) = (50 times discharge

capacity / 1 time discharge capacity)×100
```

[Table 2]

| Battery | Discharge capacity (mAh/g) | Initial efficiency (%) | Capacity retention rate (%) |
|---|---|---|---|
| Example 1A | 1450 | 82.5 | 84.6 |
| Example 2A | 1420 | 82.3 | 84.8 |
| Example 3A | 1508 | 84.3 | 85.1 |
| Example 4A | 1445 | 82.5 | 84.4 |
| Example 5A | 1420 | 86.1 | 84.1 |
| Example 6A | 1411 | 91.8 | 83.9 |
| Comparative Example 1A | 1404 | 81.7 | 81.6 |
| Comparative Example 2A | 1387 | 80.8 | 80.5 |
| Comparative Example 3A | 1399 | 81.2 | 80.9 |
| Comparative Example 4A | 1401 | 81.1 | 80.7 |
| Comparative Example 5A | 1402 | 81.3 | 81.3 |
| Comparative Example 6A | 1375 | 80.5 | 80.1 |
| Comparative Example 7A | 1405 | 81.9 | 81.8 |
| Comparative Example 8A | 1391 | 81.3 | 81.1 |
| Comparative Example 9A | 1408 | 82.1 | 81.5 |

In Examples 1 to 6, silicon-based composite particles include a Mg compound or Li compound, the silicon-based composite particles have a BET specific surface area of 5 $m^2$/g to 60 $m^2$/g, a negative electrode active material after the formation of a carbon layer has a BET specific surface area of 2 $m^2$/g to 15 $m^2$/g, and the negative electrode active material has a powder conductivity of 0.05 S/cm to 1 S/cm, and the initial efficiency and service life characteristics of the battery may be improved by allowing the silicon-based composite particles to have an appropriately low BET specific surface area and appropriately providing a carbon layer to exhibit an appropriate powder conductivity.

In contrast, in the case of Comparative Examples 1, 3, 5 and 7, the BET specific surface area of the silicon-based composite particles was excessively low due to the high heat treatment temperature, so that it could be confirmed that the discharge capacity, initial efficiency and capacity retention rate deteriorated because the swelling characteristics according to charging/discharging could not be effectively suppressed.

When the BET specific surface area of the silicon-based composite particles was excessively high as in Comparative Examples 2, 4, 6, and 8, it could be confirmed that the coating uniformity deteriorated during carbon coating, and the silicon-based composite particles were easily oxidized when exposed to the outside (moisture), and thus the capacity and efficiency characteristics particularly became poor.

When the powder conductivity of the negative electrode active material was excessively low even though the silicon-based composite particles and the negative electrode active material satisfied the BET specific surface areas as in Comparative Example 9, the charging/discharging itself was not easy, so that it could be confirmed that the capacity and efficiency deteriorated, and cycle characteristics were poor.

**Claims**

1. A negative electrode active material comprising:

   silicon-based composite particles comprising $SiO_x$, wherein 0<x<2, and a Mg compound or Li compound; and
   a carbon layer provided on the silicon-based composite particles,
   wherein the silicon-based composite particles have a BET specific surface area of 5 $m^2$/g to 60 $m^2$/g, and the negative electrode active material has a BET specific surface area of 2 $m^2$/g to 15 $m^2$/g, and
   the negative electrode active material has a powder conductivity of 0.05 S/cm to 1 S/cm at a powder density of 1.4 g/cc.

**2.** The negative electrode active material of claim 1, wherein the silicon-based composite particles have a BET specific surface area of 20 m$^2$/g to 60 m$^2$/g.

**3.** The negative electrode active material of claim 1, wherein the negative electrode active material has a BET specific surface area of 2 m$^2$/g to 12 m$^2$/g.

**4.** The negative electrode active material of claim 1, wherein the negative electrode active material has a powder conductivity of 0.05 S/cm to 0.8 S/cm.

**5.** The negative electrode active material of claim 1, wherein the silicon-based composite particles further comprise pores.

**6.** The negative electrode active material of claim 5, wherein the pores have a size of 2 nm to 45 nm.

**7.** The negative electrode active material of claim 1, wherein the Mg element or Li element is comprised in an amount of 0.1 wt% to 20 wt% based on total 100 wt% of the negative electrode active material.

**8.** The negative electrode active material of claim 1, wherein the Mg compound comprises at least any one selected from the group consisting of Mg silicates, Mg silicides and Mg oxides.

**9.** The negative electrode active material of claim 1, wherein the Li compound comprises at least any one selected from the group consisting of Li silicates, Li silicides and Li oxides.

**10.** The negative electrode active material of claim 1, wherein the carbon layer is comprised in an amount of 1 wt% to 50 wt% based on total 100 wt% of the negative electrode active material.

**11.** A method for preparing the negative electrode active material according to any one of claims 1 to 10, the method comprising:

preparing silicon-based composite particles comprising SiO$_x$, wherein 0<x<2, and a Mg compound or Li compound; and
providing a carbon layer on the surface of the silicon-based composite particles.

**12.** The method of claim 11, further comprising cooling the silicon-based composite particles to room temperature at a rate of 2°C/min to 60°C/min after the preparing of the silicon-based composite particles.

**13.** A negative electrode comprising the negative electrode active material according to any one of claims 1 to 10.

**14.** The negative electrode of claim 13, further comprising a carbon-based negative electrode active material.

**15.** A secondary battery comprising the negative electrode according to claim 13.

<table>
<tr><td colspan="2">**INTERNATIONAL SEARCH REPORT**</td><td>International application No.<br>**PCT/KR2022/012036**</td></tr>
</table>

**A.  CLASSIFICATION OF SUBJECT MATTER**

**H01M 4/36**(2006.01)i; **H01M 4/48**(2010.01)i; **H01M 4/58**(2010.01)i; **H01M 4/62**(2006.01)i; **H01M 10/052**(2010.01)i; **H01M 4/02**(2006.01)i

According to International Patent Classification (IPC) or to both national classification and IPC

**B.  FIELDS SEARCHED**

Minimum documentation searched (classification system followed by classification symbols)

H01M 4/36(2006.01); H01M 10/052(2010.01); H01M 10/0525(2010.01); H01M 4/38(2006.01); H01M 4/48(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 (negative electrode, cathode), 실리콘 (silicon), 탄소층 (carbon layer), Mg 화합물 (Mg complex), Li 화합물 (Li complex), 비표면적 (specific surface area), 분체 전도도 (powder conductivity)

**C.  DOCUMENTS CONSIDERED TO BE RELEVANT**

| Category* | Citation of document, with indication, where appropriate, of the relevant passages | Relevant to claim No. |
|---|---|---|
| Y | KR 10-2009-0028986 A (SAMSUNG SDI CO., LTD. et al.) 20 March 2009 (2009-03-20)<br>See abstract; paragraphs [0041]-[0042] and [0044]; claims 1, 5, 11-12, 15, 26, 27 and 40; and figure 1. | 1-15 |
| Y | KR 10-2020-0090058 A (LG CHEM, LTD.) 28 July 2020 (2020-07-28)<br>See abstract; paragraphs [0051]-[0052] and [0058]; and claim 6. | 1-15 |
| A | KR 10-2020-0144855 A (DAE JOO ELECTRONIC MATERIALS CO., LTD.) 30 December 2020 (2020-12-30)<br>See entire document. | 1-15 |
| A | JP 2018-029049 A (TOSOH CORP.) 22 February 2018 (2018-02-22)<br>See entire document. | 1-15 |
| A | WO 2021-057929 A1 (BTR NEW MATERIAL GROUP CO., LTD. et al.) 01 April 2021 (2021-04-01)<br>See entire document. | 1-15 |

☐ Further documents are listed in the continuation of Box C.      ☑ See patent family annex.

| | |
|---|---|
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 December 2022** | **08 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2022/012036**

| Patent document cited in search report | | | Publication date (day/month/year) | Patent family member(s) | | | Publication date (day/month/year) |
|---|---|---|---|---|---|---|---|
| KR | 10-2009-0028986 | A | 20 March 2009 | JP | 2009-070825 | A | 02 April 2009 |
| | | | | JP | 5352169 | B2 | 27 November 2013 |
| | | | | KR | 10-0913177 | B1 | 19 August 2009 |
| | | | | US | 2009-0075173 | A1 | 19 March 2009 |
| | | | | US | 8377592 | B2 | 19 February 2013 |
| KR | 10-2020-0090058 | A | 28 July 2020 | CN | 113728465 | A | 30 November 2021 |
| | | | | EP | 3902035 | A1 | 27 October 2021 |
| | | | | EP | 3902035 | A4 | 16 March 2022 |
| | | | | JP | 2022-516664 | A | 01 March 2022 |
| | | | | US | 2022-0077467 | A1 | 10 March 2022 |
| | | | | WO | 2020-149724 | A1 | 23 July 2020 |
| KR | 10-2020-0144855 | A | 30 December 2020 | KR | 10-2021-0146874 | A | 06 December 2021 |
| | | | | KR | 10-2374350 | B1 | 16 March 2022 |
| | | | | KR | 10-2452874 | B1 | 12 October 2022 |
| | | | | WO | 2020-256395 | A2 | 24 December 2020 |
| | | | | WO | 2020-256395 | A3 | 04 March 2021 |
| JP | 2018-029049 | A | 22 February 2018 | JP | 6961948 | B2 | 05 November 2021 |
| WO | 2021-057929 | A1 | 01 April 2021 | CN | 112563476 | A | 26 March 2021 |
| | | | | EP | 3907792 | A1 | 10 November 2021 |
| | | | | EP | 3907792 | A4 | 04 May 2022 |
| | | | | JP | 2022-518585 | A | 15 March 2022 |
| | | | | KR | 10-2021-0107115 | A | 31 August 2021 |
| | | | | US | 2022-0109140 | A1 | 07 April 2022 |

Form PCT/ISA/210 (patent family annex) (July 2022)

**EP 4 266 415 A1**

**Patent documents cited in the description**

- KR 1020210107517
- KR 1020190101767